# EUROPÄISCHE PATENTANMELDUNG

(11) **EP 2 117 091 A2**
(43) Veröffentlichungstag der Anmeldung: **11.11.2009**
(21) Anmeldenummer: 09159513.2
(22) Anmeldetag: 06.05.2009
(51) Int. Cl.: H02G 3/04, H02G 3/38

(54) **Fassadenkonstruktion, insbesondere Glasfassadenkonstruktion für Gebäude**

(30) Priorität: 06.05.2008 EP 08155684
(71) Anmelder: Alcoa Aluminium Deutschland, Inc., 58642 Iserlohn (DE)
(72) Erfinder: Ebbert, Thiemo, 44789 Bochum (DE)
(74) Vertreter: Trinks, Ole

(57) **Zusammenfassung**

Die Erfindung betrifft eine Fassadenkonstruktion (100), insbesondere Glasfassadenkonstruktion für Gebäude, mit mindestens einer im Wesentlichen vertikal verlaufenden Pfostenkonstruktion (10, 11, 14), welche ein gebäudeinnenseitiges Pfosten-Hauptprofil (10) und ein mit dem Pfosten-Hauptprofil (10) verbundenes gebäudeabgewandtes Pfosten-Druckprofil (11) aufweist. Um zu erreichen, dass sich in einer einfach zu realisierenden Weise Funktionseinheiten einer Gebäudeanlagentechnik zur energetischen Versorgung und/oder zur stofflichen Ver- bzw. Entsorgung des gebäudeinnenseitigen Raumes nachrüsten lassen, ist erfindungsgemäß vorgesehen, dass ein Leitungssystem (22, 23) mit mindestens einer Medienleitung (22) und/oder mit mindestens einer Elektroleitung (23) im Inneren der Pfostenkonstruktion (10, 11, 14) verläuft, und dass das Pfosten-Hauptprofil (10) mindestens einen Modulaufnahmebereich (18) zum Aufnehmen von mindestens einer an das Leitungssystem (22, 23) anschließbaren Funktionseinheit (19) zur energetischen Versorgung und/oder zur stofflichen Ver- bzw. Entsorgung des gebäudeinnenseitigen Raumes (101) aufweist.

## Beschreibung

Die Erfindung betrifft eine Fassadenkonstruktion, insbesondere Glasfassadenkonstruktion für Gebäude, mit mindestens einer im Wesentlichen vertikal verlaufenden Pfostenkonstruktion, welche ein gebäudeinnenseitiges Pfosten-Hauptprofil und ein mit dem Pfosten-Hauptprofil verbundenes gebäudeabgewandtes Pfosten-Druckprofil aufweist.

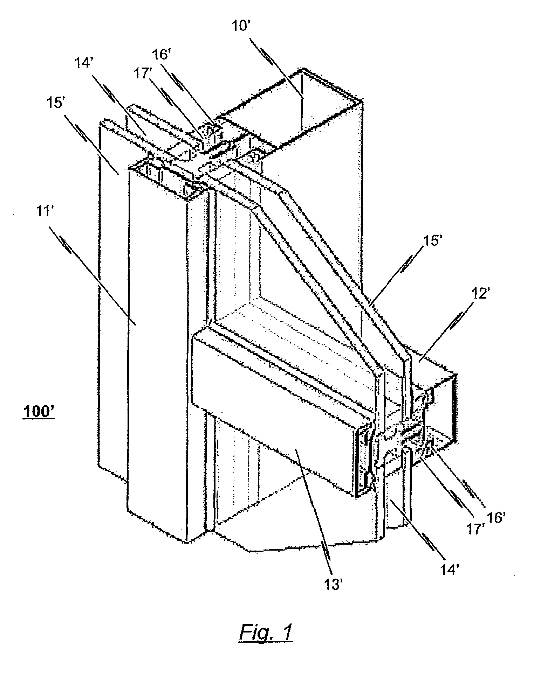

Eine derartige Fassadenkonstruktion ist dem Prinzip nach aus dem Stand der Technik bekannt. So ist beispielsweise in Fig. 1 in einer dreidimensionalen teilgeschnittenen Darstellung eine aus dem Stand der Technik allgemein bekannte Fassadenkonstruktion 100' (Pfosten-Riegel-Fassade) gezeigt, welche im wesentlichen aus einer vertikal verlaufenden Pfostenkonstruktion und einer horizontal verlaufenden Riegelkonstruktion gebildet ist. Die Pfostenkonstruktion weist ein gebäudeabgewandtes Pfosten-Druckprofil 11' und ein gebäudezugewandtes bzw. gebäudeinnenseitiges Pfosten-Hauptprofil 10' auf. In gleicher Weise setzt sich die Riegelkonstruktion aus einem gebäudeabgewandten Riegel-Druckprofil 13' und einem gebäudezugewandten bzw. gebäudeinnenseitigen Riegel-Hauptprofil 12' zusammen.

Zwischen der Pfostenkonstruktion und der Riegelkonstruktion wird ein Falzraum 14' eingeschlossen, in den die Ränder einer Doppelglasscheibe 15' eingreifen. Die jeweiligen Profile der Pfostenkonstruktion und der Riegelkonstruktion weisen Verankerungsnuten 16' zur Aufnahme von Dichtleisten 17' für die Doppelglasscheibe 15' auf.

Fassadenkonstruktionen nach der Art, wie sie in Fig. 1 dargestellt ist, haben sich in den letzten Jahrzehnten insbesondere aufgrund ihrer hohen Gestaltungsflexibilität vor allem bei Bürobauten zunehmend durchgesetzt. Allerdings weisen derartige Konstruktionen den Nachteil auf, dass diese nach ihrer Errichtung wenn überhaupt nur noch mit größerem finanziellen und baulichen Aufwand in funktionaler Hinsicht nachrüstbar ist. Heutige Fassadenkonstruktionen erfordern jedoch im zunehmenden Maße eine erhöhte Flexibilität, insbesondere im Hinblick auf die bereitzustellende Wärmedämmung aber auch im Hinblick auf andere Funktionen, wie etwa das Bereitstellen einer in dem Fassadensystem integrierten Beleuchtung oder einer Belüftung und Klimatisierung des gebäudeinnenseitigen Raumes.

Auf Grundlage der Problemstellung, dass sich herkömmliche Fassadenkonstruktionen, bei denen Pfosten- und Riegelkonstruktionen der vorstehend genannten Art zum Einsatz kommen, nur mit größerem baulichen und finanziellen Aufwand an sich ändernden Anforderungen anpassen lassen, liegt der Erfindung die Aufgabe zugrunde, eine Fassadenkonstruktion der eingangs genannten Art dahingehend weiterzubilden, dass sich in einer einfach zu realisierenden Weise Funktionseinheiten einer Gebäudeanlagentechnik zur energetischen Versorgung und/oder zur stofflichen Ver- bzw. Entsorgung des gebäudeinnenseitigen Raumes nachrüsten lassen.

Diese Aufgabe wird durch den Gegenstand des Patentanspruches 1 erfindungsgemäß dadurch gelöst, dass ein Leitungssystem mit mindestens einer Medienleitung und/oder mit mindestens einer Elektroleitung im Inneren der Pfostenkonstruktion verläuft, und dass das Pfosten-Hauptprofil einen Modulaufnahmebereich zum Aufnehmen von mindestens einer an das Leitungssystem anschließbaren Funktionseinheit zur energetischen Versorgung und/oder zur stofflichen Ver- bzw. Entsorgung des gebäudeinnenseitigen Raumes aufweist.

Der Erfindung liegt die Erkenntnis zugrunde, dass herkömmliche Fassadenkonstruktionen grundlegend verschieden aufgebaut werden müssen, um nicht nur den steigenden Anforderungen im Hinblick auf Wärmedämmung zu erfüllen, sondern auch um die zunehmend erforderliche Nachrüstbarkeit von zur Gebäudeanlagentechnik gehörenden Funktionseinheiten bereitstellen zu können. Derzeit existierende Weiterbildungen von Fassadenkonstruktionen, bei denen diese Aspekte berücksichtigt werden, sind häufig äußerst komplex aufgebaut, was nicht nur die Herstellungskosten, sondern auch die Kosten für die Errichtung derartiger Fassadenkonstruktionen erhöht.

Mit der vorliegenden Erfindung wird ein Konzept vorgestellt, bei welchem ein Leitungssystem mit mindestens einer Medienleitung, beispielsweise mit einer Warm- und einer Kaltwasserleitung und/oder mit einer Gaszufuhrleitung, und vorzugsweise ebenfalls mit wenigstens einer Elektroleitung, beispielsweise mit einer Elektroleitung zur energetischen Versorgung des Gebäudes und/oder mit einer Steuerleitung zum Übertragen von Regelund Steuerbefehlen an Funktionseinheiten der Gebäudeanlagentechnik, im Inneren der Pfostenkonstruktion verläuft.

Denkbar ist es hierbei, das Leitungssystem im Inneren des lasttragenden Pfosten-Hauptprofiles anzuordnen. Alternativ oder zusätzlich hierzu ist es ferner denkbar, beispielsweise nur einen Teil der zu dem Leitungssystem gehörenden Leitungen, wie etwa die Elektroleitungen, im Inneren des gebäudeabgewandten Pfosten-Druckprofiles verlaufen zu lassen. Gleichwohl wäre es denkbar, beispielsweise die Elektroleitungen des Leitungssystems durch den Falzraum zwischen dem Pfosten-Druckprofil und dem Pfosten-Hauptprofil laufen zu lassen.

Die einzelnen Leitungen des Leitungssystems sind vorzugsweise an einer zentralen Stelle (beispielsweise am unteren Ende der Pfostenkonstruktion), über eine geeignete Schnittstelle mit einem zentralen Versorgungssystem verbunden. Insbesondere bei einer Fassadenkonstruktion, welche sich über mehrere Gebäudestockwerke erstreckt, hat dies den Vorteil, dass die Versorgung der einzelnen Stockwerke zumindest teilweise über das im Inneren der Pfostenkonstruktion verlegte Leitungssystem erfolgen kann. Dies hat den Vorteil, dass die außen liegenden Räume des Gebäudes, d. h. die Räume, deren Außenwand durch die Fassadenkonstruktion gebildet bzw. begrenzt wird, ausschließlich über das in der Pfostenkonstruktion verlegte Leitungssystem versorgt werden können.

Andererseits zeichnet sich die erfindungsgemäße Lösung dadurch aus, dass die Pfosten an ihrer Gebäudeinnenseite einen speziellen Modulaufnahmebereich aufweisen, in welchem zur Anlagentechnik gehörende Funktionseinheiten einsetzbar und mit dem Leitungssystem verbindbar sind. Im Vergleich zu einer herkömmlichen aus dem Stand der Technik bekannten Fassadenkonstruktion ragt bei der erfindungsgemäßen Lösung somit der Pfosten der Fassadenkonstruktion durchaus etwas weiter in das Gebäudeinnere hinein, da das Pfosten-Hauptprofil mit einem Modulaufnahmebereich versehen ist. Aufgrund der Tatsache, dass in dem Modulaufnahmebereich jedoch sämtliche zur Anlagentechnik gehörenden Funktionseinheiten in modularer Weise einsetzbar sind, lässt sich die Fassadenkonstruktion in funktioneller Hinsicht äußerst flexibel an die jeweiligen Anforderungen anpassen.

Im Einzelnen ist der Modulaufnahmebereich vorzugsweise derart ausgelegt, dass in diesem Funktionseinheiten einer Gebäudeanlagentechnik zur energetischen Versorgung und/oder zur stofflichen Ver- bzw. Entsorgung des gebäudeinnenseitigen Raumes aufgenommen werden können. Die Funktionseinheiten sind in vorteilhafter Weise als modulare Bauteile ausgeführt, um somit ihre Austauschbarkeit zu erleichtern.

Die Fassadenkonstruktion ist vorzugsweise derart ausgelegt, dass zumindest eine als modulares Bauteil ausgeführte Funktionseinheit einer Gebäudeanlagentechnik in dem Modulaufnahmebereich aufgenommen und mit dem durch die Pfostenkonstruktion geführten Leitungssystem lösbar verbunden werden kann. Denkbar hierbei wäre es, die Funktionseinheit als eine Art "Einschub-Rack" zum Einschieben in den Modulaufnahmebereich auszubilden. Vorzugsweise weist die Funktionseinheit dabei einen Steckanschluss auf, über den die Funktionseinheit mit dem Leitungssystem selbstständig verbunden wird, wenn die Funktionseinheit in den Modulaufnahmebereich eingesetzt ist.

Vorteilhafte Weiterbildungen der erfindungsgemäßen Lösung sind in den abhängigen Patentansprüchen angegeben.

Nachfolgend werden unter Bezugnahme auf die beigefügten Zeichnungen mögliche Ausführungsformen der erfindungsgemäßen Lösung angegeben.

Es zeigen:
- Fig. 1:: eine Fassadenkonstruktion aus dem Stand der Technik in einer teilgeschnittenen perspektivischen Ansicht;
- Fig. 2:: eine dreidimensionale schematische Ansicht einer ersten Ausführungsform einer Fassadenkonstruktion gemäß der vorliegenden Erfindung;
- Fig. 3:: eine dreidimensionale schematische Schnittansicht einer Fassadenkonstruktion gemäß der ersten Ausführungsform der vorliegenden Erfindung;
- Fig. 4:: eine Innenansicht auf eine Fassadenkonstruktion gemäß der vorliegenden Erfindung;
- Fig. 5:: eine Innenansicht auf eine Fassadenkonstruktion gemäß der vorliegenden Erfindung ohne Abdeckung des Modulaufnahmebereiches;
- Fig. 6:: eine vertikale Schnittansicht durch eine Fassadenkonstruktion gemäß einer weiteren Ausführungsform der Erfindung;
- Fig. 7:: eine perspektivische teilgeschnittene Ansicht durch eine Pfostenkonstruktion einer Fassadenkonstruktion gemäß der vorliegenden Erfindung; und
- Fig. 8:: eine perspektivische teilgeschnittene Ansicht durch eine Pfostenkonstruktion einer Fassadenkonstruktion gemäß der vorliegenden Erfindung.

In Fig. 1 ist eine aus dem Stand der Technik bekannte Fassadenkonstruktion 100' gezeigt, welche eine Pfostenkonstruktion mit einem Pfosten-Hauptprofil 10' und einem mit dem Pfosten-Hauptprofil 10' verbundenen Pfosten-Druckprofil 11' sowie eine Riegelkonstruktion mit einem Riegel-Hauptprofil 12' sowie einem Riegel-Druckprofil 13' aufweist. Zwischen der Pfostenkonstruktion und der Riegelkonstruktion ist ein Flächenelement 15', wie beispielsweise eine Doppelglasscheibe, angeordnet.

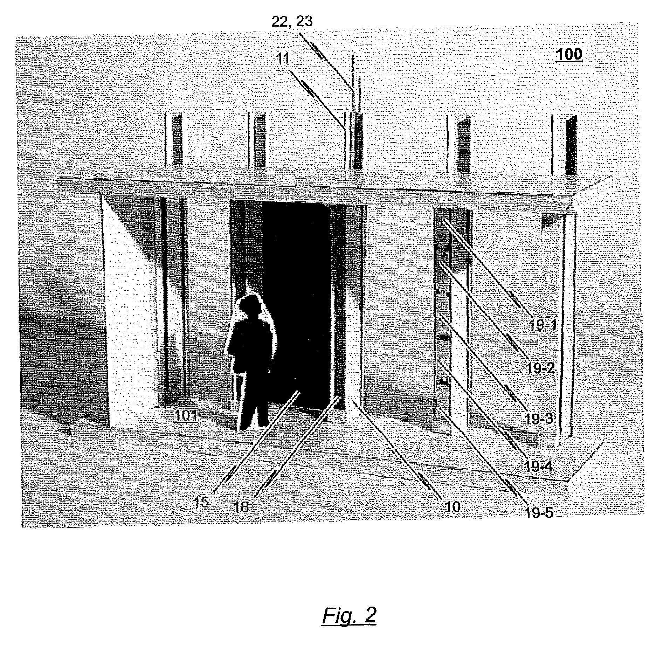

In Fig. 2 ist in einer teilgeschnittenen perspektivischen Ansicht eine erste Ausführungsform einer Fassadenkonstruktion 100 gemäß der vorliegenden Erfindung gezeigt. Die Fassadenkonstruktion 100 setzt sich aus einer vertikal verlaufenden Pfostenkonstruktion zusammen, welche ein gebäudeinnenseitiges Pfosten-Hauptprofil 10 und ein mit dem Pfosten-Hauptprofil 10 verbundenes gebäudeabgewandtes Pfosten-Druckprofil 11 aufweist. Im Unterschied zu der aus dem Stand der Technik bekannten und beispielsweise in Fig. 1 dargestellten Fassadenkonstruktion 100' erstreckt sich bei der in Fig. 2 gezeigten Lösung die Pfostenkonstruktion etwas weiter in den gebäudeinnenseitigen Raum 101, da dem Pfosten-Hauptprofil 10 nicht nur die Funktion eines lasttragenden Elements zukommt, sondern auch einen Modulaufnahmebereich 18 aufweist, in welchem modular ausgeführte Funktionseinheiten 19 der Gebäudeanlagentechnik aufnehmbar sind.

Bei der in Fig. 2 gezeigten Lösung sind in jedem Modulaufnahmebereich 18-1 bis 18-5 des Pfosten-Hauptprofils 10 insgesamt fünf modular ausgeführte Funktionseinheiten 19-1 bis 19-5 zur energetischen Versorgung und zur stofflichen Ver- bzw. Entsorgung des gebäudeinnenseitigen Raumes 101 aufnehmbar.

Wie es nachfolgend ausführlicher beschrieben wird, sind die modular ausgeführten Funktionseinheiten 19 der Gebäudeanlagentechnik durch eine Öffnung 20 in den Modulaufnahmebereich 18 der Pfostenkonstruktion einsetzbar. Hierfür ist es bevorzugt, wenn der Modulaufnahmebereich 18 mit entsprechenden (in den Zeichnungen nicht explizit dargestellten) Halterungen zur Fixierung der aufgenommenen Funktionseinheiten 19 versehen ist. Beispielsweise wäre es denkbar, die Funktionseinheiten 19 jeweils als Einschub-Rack auszubilden, welche in entsprechende Schienen des Modulaufnahmebereiches 18 eingesetzt und in den Aufnahmebereich 18 einschiebbar sind. Selbstverständlich kommen aber auch andere Lösungen in Frage.

Die mindestens eine Öffnung 20, über welche die einzelnen Funktionseinheiten 19 in den Modulaufnahmebereich 18 des Pfosten-Hauptprofils 10 einsetzbar sind, wird entweder mit Hilfe einer Tür geschlossen oder mit Hilfe einer geeigneten Abdeckung 21 bedeckt.

Der Darstellung in Fig. 2 ist des Weiteren zu entnehmen, dass ein Leitungssystem 22, 23 im Inneren der Pfostenkonstruktion 10, 11 verläuft. Im Einzelnen ist bei der in Fig. 2 dargestellten Ausführungsform vorgesehen, dass das Leitungssystem Medienleitungen 22 und Elektroleitungen 23 aufweist und im Inneren des Pfosten-Druckprofiles 11 verläuft.

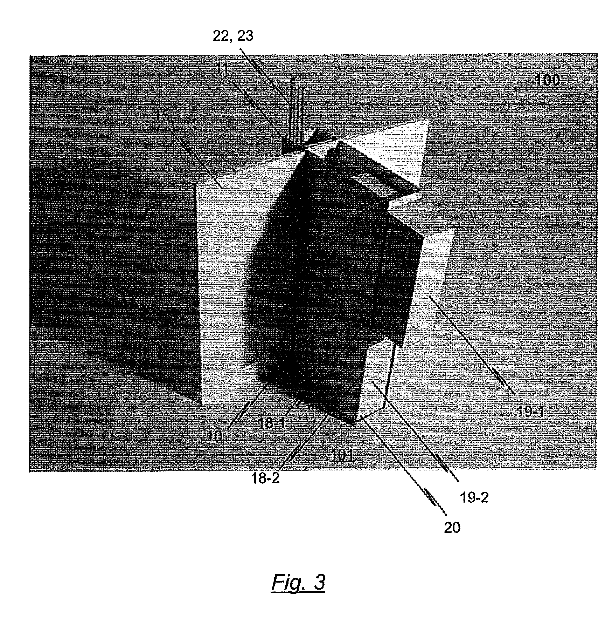

In Fig. 3 ist eine Fassadenkonstruktion 100 gezeigt, die im Wesentlichen der zuvor unter Bezugnahme auf die Darstellung gemäß Fig. 2 beschriebenen Konstruktion entspricht. Im Unterschied zu der Ausführungsform gemäß Fig. 2 allerdings ist bei der in Fig. 3 gezeigten Fassadenkonstruktion 100 der Modulaufnahmebereich 18 in zwei vertikal verlaufende Fächer 18-1 und 18-2 unterteilt, wobei in jedes der Fächer 18-1 und 18-2 jeweils eine als modulares Bauteil ausgeführte Funktionseinheit 19-1 bzw. 19-2 einsetzbar und an das Leitungssystem 22, 23 anschließbar ist. Bei der Darstellung gemäß Fig. 3 ist dabei die obere Funktionseinheit 19-2 (noch) nicht vollständig in dem zugehörigen Fach 18-2 des Modulaufnahmebereiches 18 aufgenommen. Die Darstellung gemäß Fig. 3 verdeutlicht, dass der Modulaufnahmebereich 18 die einzelnen Funktionseinheiten 19-1, 19-2 ähnlich wie eine Schublade aufnehmen kann.

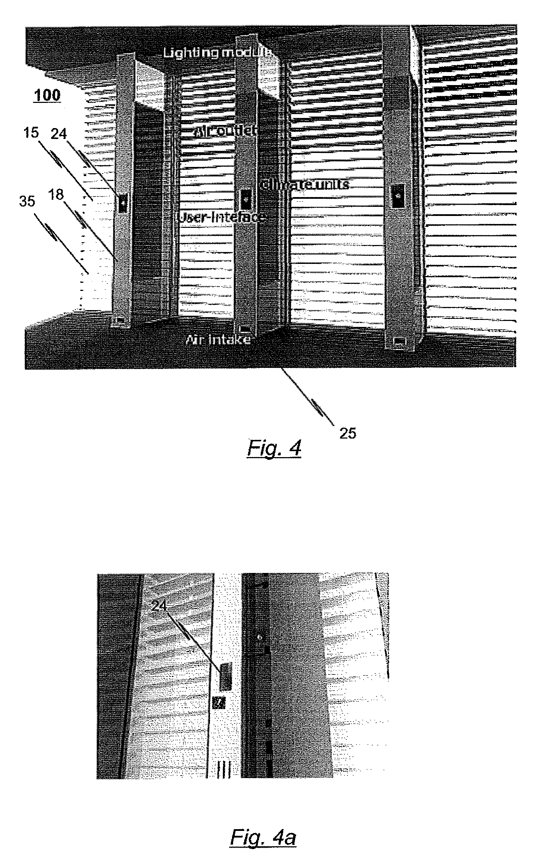

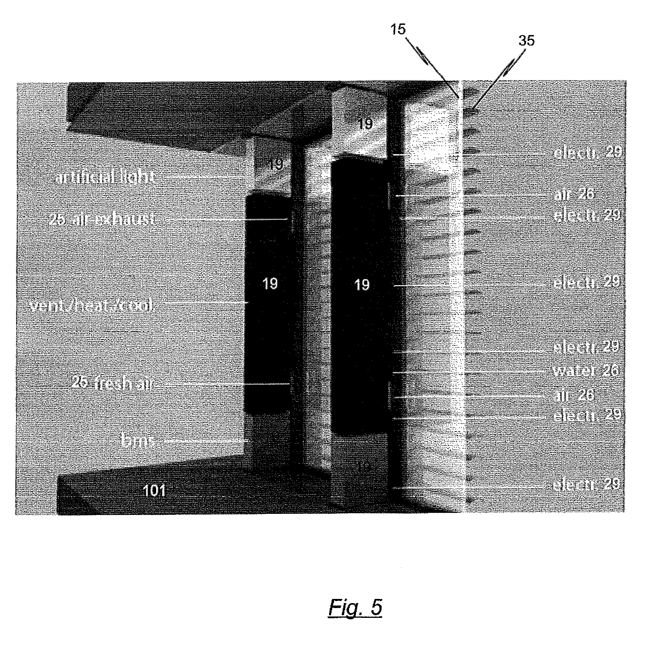

In den Figuren 4 und 5 ist jeweils eine Ansicht auf eine Fassadenkonstruktion 100 gemäß der vorliegenden Erfindung gezeigt, wobei der Betrachter im Inneren des gebäudeseitigen Raumes 101 steht und auf die von der Fassadenkonstruktion 100 gehaltene Glasscheibe 15 (Flächenelement) schaut. Wie bereits angedeutet, erstrecken sich die sichtbaren gebäudeinnenseitigen Pfostenelemente etwas tiefer in den Raum 101 hinein, da in diesen die Modulaufnahmebereiche 18 zur Aufnahme der Funktionseinheiten 19 ausgebildet sind. Der Betrachter selber kann die einzelnen Funktionseinheiten 19 über eine manuell betätigbare Benutzerschnittstelle 24 geeignet ansteuern (vgl. Fig. 4a).

Des Weiteren ist zu erkennen, dass die Funktionseinheiten 19 über Ansaug- bzw. Absaugöffnungen 25 mit dem gebäudeinnenseitigen Raum 101 kommunizieren können.

In Fig. 5 sind die gebäudeinnenseitigen Pfostenelemente ohne Abdeckung 21 dargestellt. Der Darstellung ist insbesondere zu entnehmen, dass die einzelnen Funktionseinheiten 19 über geeignete Schnittstellen mit dem im Inneren der Pfostenkonstruktion verlaufenden Leitungssystem 22, 23 verbunden sind. Im Einzelnen sind mehrere unterschiedliche Steckverbinder bzw. Steckanschlüsse 26 vorgesehen, die vorzugsweise normiert und in einer gebäudeinnenseitigen Wand 27 des Modulaufnahmebereiches 18 eingebaut sind. Dadurch wird eine Standard-Schnittstelle für die jeweiligen in dem Modulaufnahmebereich 18 aufnehmbaren Funktionseinheiten 19 bereitgestellt. Im Einzelnen kann es sich hierbei um einen normierten Steckverbinder 26 handeln, der über eine entsprechende elektrische Anschlussleitung 28 mit einer Elektroleitung 23 des Leitungssystems 22, 23 verbunden ist.

Ferner können elektrische Anschlussleitungen 28 vorgesehen sein, die mit einer elektrischen Steuerleitung 23 des Leitungssystems verbunden sind. Ebenfalls sind an definierten Stellen normierte Steckanschlüsse 29 vorgesehen, welche über entsprechende Fluidleitungen 30 (Wasser- oder Gasleitungen) mit den zugehörigen Medienleitungen 22 des Leitungssystems verbunden sind.

In Fig. 4a ist eine mögliche Realisierung für eine Benutzerschnittstelle 24 dargestellt, über welche ein Benutzer die in dem Modulaufnahmebereich 18 des Pfosten-Hauptprofils 10 angeordneten Funktionseinheiten 19 bedienen kann.

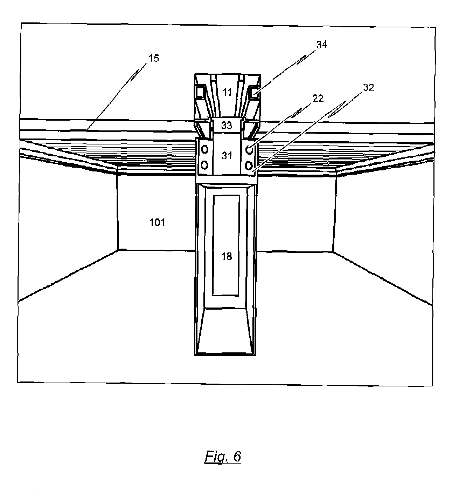

In Fig. 6 ist in einer Querschnittsansicht der Aufbau einer Pfostenkonstruktion für eine Fassadenkonstruktion 100 gemäß einer weiteren Ausführungsform der vorliegenden Erfindung gezeigt. Wie dargestellt, ist der Modulaufnahmebereich 18 von dem lasttragenden Bereich 31 des Pfosten-Hauptprofils 10 räumlich getrennt, wobei im Inneren des Pfosten-Hauptprofils 10 insgesamt vier Medienleitungen 22 (hier Warm- und Kaltwasserleitungen) verlaufen. Die im Inneren des Pfostenprofils 10 verlaufenden Medienleitungen 22 sind in einem Isolierkern 32 gebettet.

Wie bei der herkömmlichen Lösung gemäß Fig. 1 ist ferner ein Pfosten-Druckprofil 11 vorgesehen, welches über einen Isoliersteg 33 mit dem Pfosten-Hauptprofil 10 derart verbunden ist, dass zwischen dem Pfosten-Druckprofil 11 und dem Pfosten-Hauptprofil 10 ein Falzraum 14 gebildet wird, in welchem die jeweiligen Ränder von Flächenelementen 15 (Glasscheiben) eingesetzt sind. Das Pfosten-Druckprofil 11 weist vorzugsweise ferner eine Tragkonstruktion 34 für Sonnen-, Sicht- oder Blend-Schutzlamellen 35 auf.

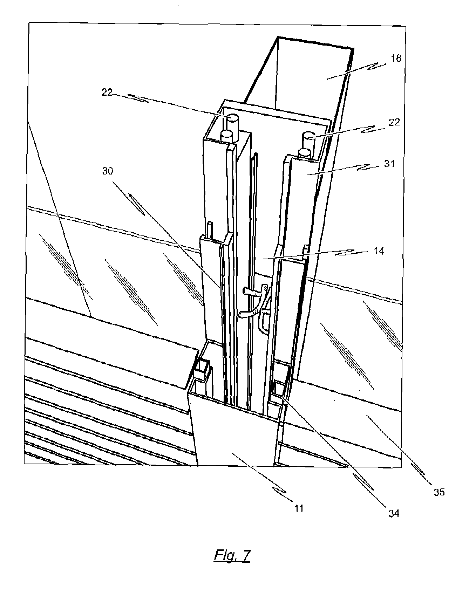

In Fig. 7 ist in einer teilgeschnittenen perspektivischen Ansicht die Pfostenkonstruktion gemäß Fig. 6 dargestellt. Anhand der Darstellung gemäß Fig. 7 ist insbesondere zu erkennen, dass Anschlussleitungen 28, 30 vorgesehen sind, die im wesentlichen horizontal verlaufen und einerseits in den jeweiligen Leitungen 22, 23 des Leitungssystems münden und andererseits an ihrem gebäudeinnenseitigen Ende geeignete normierte Anschlüsse 26, 29 zur Verbindung mit den Funktionseinheiten 19 der Gebäudeanlagentechnik aufweisen.

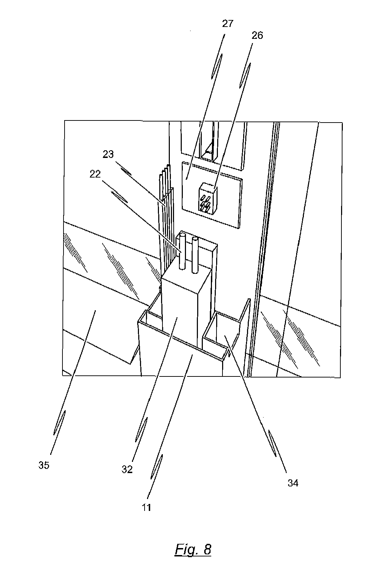

In Fig. 8 ist eine weitere Ausführungsform eines Pfostenprofils für eine Fassadenkonstruktion 100 gemäß der vorliegenden Erfindung gezeigt. Bei dieser Ausführungsform verlaufen die in einem Isolierkörper 32 eingebetteten Medienleitungen 22 im Inneren des Pfosten-Druckprofils 11. Die elektrischen Leitungen 23 des Leitungssystems werden im Inneren des Pfosten-Hauptprofils 10 geführt. An der gebäudeinnenseitigen Wand des Pfosten-Hauptprofils 10 ist ein entsprechender Anschlussblock (Schnittstelle 26, 29) vorgesehen, an welchem die Anschlussleitungen 28, 30 zur Verbindung mit dem Leitungssystem 22, 23 angeschlossen werden können.

Unter dem hierin verwendeten Begriff "Gebäudeanlagentechnik" sind alle technischen Maßnahmen zu verstehen, die in Räumen und Gebäuden, aber auch Betriebsstätten und öffentlichen Einrichtungen der energetischen (Heizung, Beleuchtung) und stofflichen (Wasser, Luft) Versorgung bzw. der Entsorgung aller Abfallprodukte (Abwasser, Müll) gelten. Der Zweck ist, das Gebäude für die Bewohner und Nutzer "benutzbar" zu machen und verschiedene Sicherheitsaufgaben zu erfüllen. Einerseits sind damit üblicherweise notwendige Ausstattungsmerkmale wie Kanalisation, Stromversorgung oder Beleuchtung gemeint.

Zu Funktionseinheiten der Gebäudeanlagentechnik gehören insbesondere:
- Anlagen der Gas-, Wasser-, Abwassertechnik, wie etwa Anlagen und Einrichtungen für Sanitärtechnik mit Wasseraufbereitung und Abwasserbehandlung, Anlagen für Medientechnik / Druckluft / Staubsauganlagen und Anlagen für Löschanlagen (Hydrantenanlagen, Sprinkleranlagen, Schaumlöschanlagen, Gaslöschanlagen, u.a.);
- Anlagen der Wärmeversorgungs-, Brauchwassererwärmungs- und Raumlufttechnik, wie etwa Anlagen und Einrichtungen für Heizung, Warmwasserbereitungsanlagen und Thermische Solaranlagen, Wärmepumpen, Klima-, Lüftungs-, Entlüftungs-, Entrauchungsanlagen, prozesslufttechnische Anlagen, und Anlagen für Kälte- und Kühltechnik;
- Anlagen der Elektrotechnik, wie etwa Anlagen und Einrichtungen für Starkstromanlagen (Mittel- und Niederspannung), Eigenstromversorgungsanlagen (Notstrom), Niederspannungsschaltanlagen, Niederspannungsinstallationsanlagen, Blitzschutz- und Erdungsanlagen, Beleuchtungs- und lichttechnische Anlagen, Anlagen für Notbeleuchtung und Fernmelde- und Informationstechnische Anlagen ("Schwachstrom") darunter zählen insbesondere Nachrichtentechnik und Sicherheitstechnik; und
- Anlagen der Gebäudeleittechnik, wie etwa Anlagen und Einrichtungen für Automationssysteme, Gebäudeautomatisierung, Leittechnik, Regelungstechnik und Schaltschränke und deren Software.

Zusammenfassend bleibt festzuhalten, dass es sich bei der erfindungsgemäßen Lösung um eine Fassadenkonstruktion handelt, die mindestens eine im Wesentlichen vertikal verlaufende Pfostenkonstruktion aufweist, welche ein gebäudeinnenseitiges Pfosten-Hauptprofil und ein mit dem Pfosten-Hauptprofil verbundenes gebäudeabgewandtes Pfosten-Druckprofil aufweist, wobei ein Leitungssystem mit mindestens einer Medienleitung und/oder mit mindestens einer Elektroleitung im Inneren der Pfostenkonstruktion verläuft, und wobei das Pfosten-Hauptprofil einen Modulaufnahmebereich zum Aufnehmen von mindestens einer an das Leitungssystem anschließbaren Funktionseinheit zur energetischen Versorgung und/oder zur stofflichen Ver- bzw. Entsorgung des gebäudeinnenseitigen Raumes aufweist.

Gemäß einem Aspekt der Erfindung weist das Pfosten-Hauptprofil mindestens eine Öffnung auf, über welche die mindestens eine als modulares Bauteil ausgeführte Funktionseinheit in den Modulaufnahmebereich einsetzbar und an das Leitungssystem anschließbar ist.

Gemäß einem weiteren Aspekt der Erfindung ist der Modulaufnahmebereich in mindestens zwei horizontal verlaufende Bereiche eingeteilt, wobei in jede Unterteilung des Modulaufnahmebereiches jeweils eine als modulares Bauteil ausgeführte Funktionseinheit aufnehmbar und an dem Leitungssystem anschließbar ist.

Gemäß einem weiteren Aspekt der Erfindung weist das Posten-Hauptprofil einen im Inneren und längs des Pfosten-Hauptprofils laufenden Leitungsaufnahmebereich auf, der räumlich getrennt von dem Modulaufnahmebereich ausgeführt ist, und in dem zumindest ein Teil der Leitungen des Leitungssystems geführt wird.

Gemäß einem weiteren Aspekt der Erfindung erstreckt sich die Fassadenkonstruktion über mehrere Gebäudestockwerke, wobei das Pfosten-Hauptprofil für jedes Gebäudestockwerk einen Modulaufnahmebereich aufweist, und wobei das Leitungssystem über eine Schnittstelle mit einem zentralen Versorgungssystem verbindbar ist.

Gemäß einem weiteren Aspekt der Erfindung sind im wesentlichen horizontal verlaufende Anschlussleitungen vorgesehen, welche die jeweiligen Leitungen des Leitungssystems mit in dem Modulaufnahmebereich vorgesehenen Standard-Schnittstellten verbindet, wobei die mindestens eine als modulares Bauteil ausgeführte Funktionseinheit in ihrem in dem Modulaufnahmebereich aufgenommenen Zustand an die Standard-Schnittstelle anschließbar ist.

Gemäß einem weiteren Aspekt der Erfindung ist in der Pfostenkonstruktion ein sich in vertikaler Richtung streckender Isolierkörper vorgesehen, in welchem zumindest die mindestens eine Medienleitung des Leitungssystems verläuft.

Gemäß einem weiteren Aspekt der Erfindung weist die Standard-Schnittstellen mindestens einen fest in einer gebäudeinnenseitigen Wand des Modulaufnahmebereiches eingebauten, normierten Steckverbinder auf, der über eine elektrische Anschlussleitung mit einer Elektroleitung des Leitungssystems verbunden ist. Alternativ oder zusätzlich hierzu weist die Standard-Schnittstelle mindestens einen fest in einer gebäudeinnenseitigen Wand des Modulaufnahmebereiches eingebauten, normierten Steckverbinder auf, der über eine elektrische Anschlussleitung mit einer Steuerleitung des Leitungssystems verbunden ist. Alternativ oder zusätzlich hierzu weist die Standard-Schnittstellen mindestens einen fest in einer gebäudeinnenseitigen Wand des Modulaufnahmebereiches eingebauten, normierten Steckanschluss auf, der über eine Fluidleitung mit einer Medienleitung des Leitungssystems verbunden ist.

Gemäß einem weiteren Aspekt der Erfindung verläuft zumindest ein Teil der Leitungen des Leitungssystems im Inneren des Pfosten-Druckprofils.

Gemäß einem weiteren Aspekt der Erfindung weist das Pfosten-Druckprofil eine Tragkonstruktion für Sonnen-, Sicht- und/oder Blend-Schutzlammellen auf.

Gemäß einem weiteren Aspekt der Erfindung weist die Fassadenkonstruktion ferner mindestens eine im wesentlichen horizontal verlaufende Riegelkonstruktion mit einem gebäudeabgewandten Riegel-Druckprofil und einem gebäudeinnenseitigen Riegel-Hauptprofil auf, wobei die Pfostenkonstruktion und die Riegelkonstruktion zwischen sich einen Falzraum einschließen, in den die Ränder eines Flächenelements, insbesondere eine Glasscheibe, eingreifen, und wobei im Inneren der Riegelkonstruktion mindestens eine mit dem Leitungssystem verbundene Leitung verläuft, welche mit einer in der Riegelkonstruktion integrierten Funktionseinheit verbindbar ist.

Gemäß einem weiteren Aspekt der Erfindung weist die Fassadenkonstruktion ferner mindestens eine als modulares Bauteil ausgeführte Funktionseinheit einer Gebäudeanlagentechnik zur energetischen Versorgung und/oder zur stofflichen Ver- bzw. Entsorgung des gebäudeinnenseitigen Raumes auf, wobei die mindestens eine als modulares Bauteil ausgeführte Funktionseinheit in dem Modulaufnahmebereich aufgenommen und mit dem Leitungssystem lösbar verbunden ist.

## Patentansprüche

1. Fassadenkonstruktion (100), insbesondere Glasfassadenkonstruktion für Gebäude, mit mindestens einer im Wesentlichen vertikal verlaufenden Pfostenkonstruktion (10, 11, 14), welche ein gebäudeinnenseitiges Pfosten-Hauptprofil (10) und ein mit dem Pfosten-Hauptprofil (10) verbundenes gebäudeabgewandtes Pfosten-Druckprofil (11) aufweist,
**dadurch gekennzeichnet,**
**dass** ein Leitungssystem (22, 23) mit mindestens einer Medienleitung (22) und/oder mit mindestens einer Elektroleitung (23) im Inneren der Pfostenkonstruktion (10, 11, 14) verläuft; und
**dass** das Pfosten-Hauptprofil (10) mindestens einen Modulaufnahmebereich (18) zum Aufnehmen von mindestens einer an das Leitungssystem (22, 23) anschließbaren Funktionseinheit (19) zur energetischen Versorgung und/oder zur stofflichen Ver- bzw. Entsorgung des gebäudeinnenseitigen Raumes (101) aufweist.

2. Fassadenkonstruktion (100) nach Anspruch 1,
wobei das Pfosten-Hauptprofil (10) mindestens eine Öffnung (20) aufweist, über welche die mindestens eine als modulares Bauteil ausgeführte Funktionseinheit (19) in den Modulaufnahmebereich (18) einsetzbar und an das Leitungssystem (22, 23) anschließbar ist.

3. Fassadenkonstruktion (100) nach Anspruch 1 oder 2,
wobei der Modulaufnahmebereich (18) in mindestens zwei horizontal verlaufende Bereiche (18-1, 18-2) eingeteilt ist, wobei in jede Unterteilung des Modulaufnahmebereiches (18) jeweils eine als modulares Bauteil ausgeführte Funktionseinheit (19) aufnehmbar und an dem Leitungssystem (22, 23) anschließbar ist.

4. Fassadenkonstruktion (100) nach einem der vorhergehenden Ansprüche,
wobei das Pfosten-Hauptprofil (10) einen im Inneren und längs des Pfosten-Hauptprofiles (10) laufenden Leitungsaufnahmebereich (31) aufweist, der räumlich getrennt von dem Modulaufnahmebereich (18) ausgeführt ist, und in dem zumindest ein Teil der Leitungen des Leitungssystems (22, 23) geführt wird.

5. Fassadenkonstruktion (100) nach einem der vorhergehenden Ansprüche,
wobei sich die Fassadenkonstruktion (100) über mehrere Gebäudestockwerke erstreckt, wobei das Pfosten-Hauptprofil (10) für jedes Gebäudestockwerk mindestens einen Modulaufnahmebereich (18) aufweist, und wobei das Leitungssystem (22, 23) über eine Schnittstelle mit einem zentralen Versorgungssystem verbindbar ist.

6. Fassadenkonstruktion (100) nach einem der vorhergehenden Ansprüche,
wobei im wesentlichen horizontal verlaufende Anschlussleitungen (28, 30) vorgesehen sind, welche die jeweiligen Leitungen des Leitungssystems (22, 23) mit in dem Modulaufnahmebereich (18) vorgesehenen Standard-Schnittstellten (26, 29) verbindet, wobei die mindestens eine als modulares Bauteil ausgeführte Funktionseinheit (19) in ihrem in dem Modulaufnahmebereich (18) aufgenommenen Zustand an die Standard-Schnittstelle (26, 29) anschließbar ist.

7. Fassadenkonstruktion (100) nach einem der vorhergehenden Ansprüche,
wobei in der Pfostenkonstruktion (10, 11, 14) ein sich in vertikaler Richtung streckender Isolierkörper (32) vorgesehen ist, in welchem zumindest die mindestens eine Medienleitung (22) des Leitungssystems (22, 23) verläuft.

8. Fassadenkonstruktion (100) nach einem der vorhergehenden Ansprüche,
wobei die Standard-Schnittstellen (26, 29) mindestens einen fest in einer gebäudeinnenseitigen Wand (27) des Modulaufnahmebereiches (18) eingebauten, normierten Steckverbinder (29) aufweist, der über eine elektrische Anschlussleitung (28) mit einer Elektroleitung (23) des Leitungssystems (22, 23) verbunden ist; und/oder wobei die Standard-Schnittstelle (26, 29) mindestens einen fest in einer gebäudeinnenseitigen Wand (27) des Modulaufnahmebereiches (18) eingebauten, normierten Steckverbinder (29) aufweist, der über eine elektrische Anschlussleitung (28) mit einer Steuerleitung des Leitungssystems (22, 23) verbunden ist; und/oder wobei die Standard-Schnittstelle (26, 29) mindestens einen fest in einer gebäudeinnenseitigen Wand (27) des Modulaufnahmebereiches (18) eingebauten, normierten Steckanschluss (29) aufweist, der über eine Fluidleitung (30) mit einer Medienleitung (22) des Leitungssystems (22, 23) verbunden ist.

9. Fassadenkonstruktion (100) nach einem der vorhergehenden Ansprüche,
wobei zumindest ein Teil der Leitungen des Leitungssystems (22, 23) im Inneren des Pfosten-Druckprofils (11) verläuft.

10. Fassadenkonstruktion (100) nach einem der vorhergehenden Ansprüche,
wobei das Pfosten-Druckprofil (11) eine Tragkonstruktion (34) für Sonnen-, Sicht-und/oder Blend-Schutzlammellen (35) aufweist.

11. Fassadenkonstruktion (100) nach einem der vorhergehenden Ansprüche,
welches ferner mindestens eine im wesentlichen horizontal verlaufende Riegelkonstruktion (12, 13) mit einem gebäudeabgewandten Riegel-Druckprofil (13) und einem gebäudeinnenseitigen Riegel-Hauptprofil (12) aufweist, wobei die Pfostenkonstruktion (10, 11) und die Riegelkonstruktion (12, 13) zwischen sich einen Falzraum (14) einschließen, in den die Ränder eines Flächenelements (15), insbesondere eine Glasscheibe, eingreifen, und wobei im Inneren der Riegelkonstruktion (12, 13, 14) mindestens eine mit dem Leitungssystem (22, 23) verbundene Leitung verläuft, welche mit einer in der Riegelkonstruktion (12, 13) integrierten Funktionseinheit (19) verbindbar ist.

12. Fassadenkonstruktion (100) nach einem der vorhergehenden Ansprüche,
welches ferner mindestens eine als modulares Bauteil ausgeführte Funktionseinheit (19) einer Gebäudeanlagentechnik zur energetischen Versorgung und/oder zur stofflichen Ver- bzw. Entsorgung des gebäudeinnenseitigen Raumes (101) aufweist, wobei die mindestens eine als modulares Bauteil ausgeführte Funktionseinheit (19) in dem Modulaufnahmebereich (18) aufgenommen und mit dem Leitungssystem (22, 23) lösbar verbunden ist.

13. Fassadenkonstruktion (100) nach Anspruch 12,
wobei die als modulares Bauteil ausgeführte Funktionseinheit (19) eine aus der nachfolgend aufgeführten Gruppe ausgewählte Einrichtung ist:
- eine Einrichtung für die Gas-, Wasser- und/oder Abwassertechnik des gebäudeinnenseitigen Raumes (101);
- eine Einrichtung für die Wärmeversorgungs-, Brauchwassererwärmungs-und/oder Raumlufttechnik des gebäudeinnenseitigen Raumes (101);
- eine Einrichtung für die Elektrotechnik des gebäudeinnenseitigen Raumes (101);
- eine Einrichtung für die Nachrichtentechnik des gebäudeinnenseitigen Raumes (101);
- eine Einrichtung für die Sicherheitstechnik des gebäudeinnenseitigen Raumes (101); und
- eine Einrichtung für die Gebäudeleittechnik des gebäudeinnenseitigen Raumes (101).

14. Fassadenkonstruktion (100) nach Anspruch 12 oder 13,
wobei die Funktionseinheit (19) als Einschub-Rack zum Einschieben in den Modulaufnahmebereich (18) ausgebildet ist.

15. Fassadenkonstruktion (100) nach einem der Ansprüche 12 bis 14,
wobei die Funktionseinheit (19) einen Steckanschluss aufweist, über den die Funktionseinheit (19) mit dem Leitungssystem (22, 23) selbstständig verbunden wird, wenn die Funktionseinheit (19) in den Modulaufnahmebereich (18) eingesetzt ist.

16. Fassadenkonstruktion (100) nach einem der Ansprüche 12 bis 15,
welches ferner ein in dem Modulaufnahmebereich (18) aufnehmbares Lüftermodul aufweist, welches über eine Zuluft-/Abluftöffnung mit dem gebäudeinnenseitigen Raum kommuniziert.
